(19) Europäisches Patentamt
European Patent Office
Office européen des brevets

(11) **EP 3 658 860 B1**

## (12) EUROPÄISCHE PATENTSCHRIFT

(45) Veröffentlichungstag und Bekanntmachung des Hinweises auf die Patenterteilung:
**06.07.2022  Patentblatt 2022/27**

(21) Anmeldenummer: **18793618.2**

(22) Anmeldetag: **18.10.2018**

(51) Internationale Patentklassifikation (IPC):
**G01D 5/48** (2006.01)

(52) Gemeinsame Patentklassifikation (CPC):
**G01D 5/48**

(86) Internationale Anmeldenummer:
**PCT/EP2018/078574**

(87) Internationale Veröffentlichungsnummer:
**WO 2019/091743 (16.05.2019 Gazette 2019/20)**

(54) **WINKELSENSOR MIT ERFASSUNG DER DREHSTELLUNG MIT RADARTECHNIK**

ANGLE SENSOR DETECTING THE ANGULAR POSITION WITH RADAR TECHNOLOGY

CAPTEUR D'ANGLE AU MOYEN DE LA MESURE DE POSITION ROTATIVE PAR TECHNOLOGIE RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2017  EP 17201285**

(43) Veröffentlichungstag der Anmeldung:
**03.06.2020  Patentblatt 2020/23**

(73) Patentinhaber: **Siemens Aktiengesellschaft 80333 München (DE)**

(72) Erfinder:
- **MEYER, Martin
  90425 Nürnberg (DE)**
- **ZETTNER, Jürgen
  90587 Veitsbronn (DE)**

(56) Entgegenhaltungen:
| | |
|---|---|
| EP-A1- 1 790 953 | DE-A1- 19 632 345 |
| DE-B3-102016 202 052 | US-A1- 2016 138 946 |

**Beschreibung**

Die vorliegende Erfindung geht aus von einem Winkelsensor,

- wobei der Winkelsensor einen Grundkörper und ein Drehelement aufweist,
- wobei das Drehelement in dem Grundkörper gelagert ist, so dass das Drehelement um eine Drehachse rotierbar ist,
- wobei am Grundkörper eine Anzahl von Sendeantennen angeordnet ist, die ein jeweiliges erstes Sendesignal emittieren,
- wobei am Grundkörper mehrere Empfangsantennen angeordnet sind, die ein jeweiliges erstes Empfangssignal empfangen und ihr jeweiliges erstes Empfangssignal einer Auswertungseinrichtung zuführen, und
- wobei die Auswertungseinrichtung durch Auswerten ausschließlich der ihr zugeführten ersten Empfangssignale oder durch Auswerten der ihr zugeführten ersten Empfangssignale und anhand der ersten Sendesignale ermittelter erster Basissignale die Drehstellung des Drehelements ermittelt.

Ein derartiger Winkelsensor ist aus der US 2016/0 138 946 A1 bekannt.

Winkelsensoren sind für eine Vielzahl von Anwendungen erforderlich. Beispielsweise muss bei elektrischen Maschinen der mechanische Drehwinkel für Positionierungsaufgaben und als Feedback für die Stromregelung gemessen werden. Beispielsweise werden für Servoantriebe in der Regel optische, magnetische, induktive oder kapazitive Winkelsensoren verwendet. In vielen Fällen sind die Winkelsensoren eigenständige Bauteile, bei denen der Grundkörper des Winkelsensors mit einem Grundkörper der Maschine verbunden ist und das Drehelement des Winkelsensors mit einer rotierenden Welle der Maschine, deren Drehstellung erfasst werden soll, verbunden ist. In manchen Fällen sind die Winkelsensoren integrale Bauteile der Maschine.

Unabhängig davon, ob die eine oder die andere Vorgehensweise ergriffen wird, bestehen die Winkelsensoren immer aus einer Erfassungseinheit, welche eine Maßverkörperung abtastet. Die Erfassungseinheit ist auf dem Grundkörper des Winkelsensors angeordnet, die Maßverkörperung auf dem Drehelement des Winkelsensors. Es ist möglich, dass der Winkelsensor selbst die Drehstellung ermittelt und an eine Steuerung übergibt. Alternativ kann der Winkelsensor Rohsignale - beispielsweise Sinus- und Cosinussignale - weiterleiten, aus denen dann eine andere Einrichtung, beispielsweise die erwähnte Steuerung, die Drehstellung ermittelt.

Die bekannten Winkelsensoren weisen verschiedene Nachteile auf.

So sind beispielsweise optische hochgenaue Winkelsensoren kostenintensiv, da in der Regel eine hochgenaue Montage der Erfassungseinheit relativ zur Maßverkörperung erforderlich ist. Im Falle der Ausgestaltung als integrierter Winkelsensor ist ein derartiger Sensor schmutzanfällig und muss in aufwendiger Weise durch den Hersteller der Maschine gekapselt werden.

Die Maßverkörperungen müssen für eine hohe Genauigkeit im Bereich von 18 Bit und mehr aufwendig gefertigt werden, meist in Mikrostrukturtechnik, da die Strukturgrößen mit zunehmender Genauigkeitsklasse immer kleiner werden. Dies gilt insbesondere bei transmissiv oder reflexiv abzutastenden optischen Strukturen im Mikrometerbereich. Im Falle einer Ausgestaltung der Maßverkörperung als codiertes Multipol-Magnetrad oder Multipol-Zahnrad oder als induktive oder kapazitiv wirkende Leiterplattenstruktur ist eine Abtastung in einem sehr geringen Abstand zur Maßverkörperung erforderlich. Derartige Abtastungen sind oftmals nicht industrietauglich.

Weiterhin sollen die Maßverkörperungen immer kleiner werden, um den passiven Bauraum, der nicht dem eigentlichen Zweck der Maschine dient (beispielsweise dem Aufbringen eines Drehmoments), zu minimieren.

Herkömmliche Maßverkörperungen werden mittels einer Abtasteinheit abgetastet, in manchen Fällen auch mittels mehrerer Abtasteinheiten. Die Kodierungsspuren der Maßverkörperungen sind meist kleinräumig parallel, seriell oder als sogenannte Noniusspulen kreisförmig angeordnet.

Im Rahmen der linearen Abstandsmessung sind weiterhin Messverfahren und Messanordnungen bekannt, welche eine phasenmessende Radartechnik in einem Hohlleiter nutzen, um bei Positionierungsaufgaben Abstände von mehreren Metern mit einer Positionierungsauflösung von wenigen Mikrometern zu erfassen. Rein beispielhaft kann auf die DE 10 2013 209 364 A1 und auf die DE 10 2013 202 765 A1 verwiesen werden. Derartige Messanordnungen umfassen einen Sensor zum Empfangen einer elektromagnetischen Welle und ein Führungsteil zum Führen der elektromagnetischen Welle. Das Führungsteil ist als länglicher Hohlleiter ausgebildet. Es besteht vorzugsweise aus Metall oder ist metallisch beschichtet. Das Führungsteil weist in Längsrichtung einen Schlitz auf, welcher der Führung der elektromagnetischen Welle dient. Die Auswertung des empfangenen Signals kann beispielsweise mit der sogenannten 6-TorSchaltung erfolgen.

Das Patendokument DE 10 2016 202 052 B3 betrifft ein Verfahren sowie eine Anordnung zur Positionierung einer robotergeführten Interaktionsvorrichtung gegenüber einem Objekt. Bei dem Verfahren werden eine oder mehrere Radarantennen in die Interaktionsvorrichtung integriert oder an der Interaktionsvorrichtung angebracht und zur Aussendung und zum Empfang von Radarsignalen angesteuert. Aus den empfangenen Radarsignalen wird eine Entfernung zu dem Objekt bestimmt und eine 3D-Abbildung einer mit der einen oder den mehreren Radarantennen erfassten Szene generiert. Die Interaktionsvorrichtung wird dann auf Basis der aus den Radarsignalen bestimmten Entfernung und der aus den Radarsignalen generierten 3D-Abbildung gegenüber dem Objekt positioniert. Das Verfahren und die Anordnung ermöglichen eine hochgenaue Positionierung der Interaktionsvorrichtung in nahezu beliebigen Umgebungen und unter eingeschränkten Sichtverhältnissen, ohne hierzu Umbauten oder zusätzliche Sensorinstallationen am jeweiligen Einsatzort vornehmen zu müssen.

Um bei einem Wälzlager mit Drehzahlmeßeinrichtung, insbesondere einem Radlager für Kraftfahrzeuge, zu erreichen, daß bei einfachem und kostengünstigem Aufbau und geringen Abmessungen eine gegenüber Toleranzen von Lager und Umbauteilen unempfindliche telemetrische Energie- und Signalübertragung zwischen Lager und Umgebung erfolgt, wird im Patentdokument DE 196 32 345 A1 vorgeschlagen, dass von einem außerhalb des Lagers angeordneten Hochfrequenzsender gerichtete Mikrowellen auf eine am drehenden Teil des Lagers angeordnete Kodierscheibe gesendet werden, die von der Kodierscheibe je nach deren Stellung reflektiert werden oder nicht, wobei die reflektierten Mikrowellen von einem außerhalb des Lagers angeordneten Empfänger aufgefangen und die daraus resultierenden Impulse einer Signalverarbeitung und Weiterleitungseinheit zugeführt werden.

Die Vorrichtung in EP 1 790 953 A1 weist einen Positionscode tragenden Codeträger auf, wobei eine Abtastfolie als lichtempfindliche Zeile oder Fläche zur Erfassung des Positionscodes und zur Erzeugung eines positionsabhängigen Abtastsignals ausgebildet ist. Dem Abtastsignal ist ein Winkel zwischen Codeträger und Abtastfolie zugeordnet. Die Scanfolie umgibt den Codeträger vollständig oder der Codeträger umgibt die Scanfolie entlang des Umfangs vollständig.

Die Aufgabe der vorliegenden Erfindung besteht darin, einen Winkelsensor zu schaffen, der auf einfache und zuverlässige Weise mit hoher Genauigkeit eine Ermittlung der Drehstellung des Drehelements des Winkelsensors ermöglicht.

Die Aufgabe wird durch einen Winkelsensor mit den Merkmalen des Anspruchs 1 gelöst. Vorteilhafte Ausgestaltungen des Winkelsensors sind Gegenstand der abhängigen Ansprüche 2 bis 10.

Erfindungsgemäß wird ein Winkelsensor der eingangs genannten Art dadurch ausgestaltet,

- dass auf dem Drehelement in einem radialen Reflektorabstand von der Drehachse ein sich tangential zur Drehachse gesehen nur über einen Teilumfang erstreckendes Reflektorelement angeordnet ist, welches das von der jeweiligen Sendeantenne emittierte jeweilige erste Sendesignal reflektiert, und
- dass die Empfangsantennen das von dem Reflektorelement reflektierte Signal als jeweiliges erstes Empfangssignal empfangen.

Es wird also im Kern über die Variierung des Abstands des Reflektorelements von den Empfangsantennen als Funktion der Drehstellung auf die Drehstellung zurückgeschlossen.

Vorzugsweise sind die Empfangsantennen orthogonal zur Drehachse gesehen am Grundkörper zweidimensional verteilt angeordnet sind. Dadurch kann die Drehstellung genauer ermittelt werden. Dies gilt ganz besonders dann, wenn die Empfangsantennen am Grundkörper in Form eines zweidimensionalen Arrays mit einer Mehrzahl von Zeilen und einer Mehrzahl von Spalten angeordnet sind. Prinzipiell gilt dies aber auch dann, wenn die Empfangsantennen zusätzlich zur Verteilung in der orthogonal zur Drehachse verlaufenden Ebene auch eine Höhenverteilung längs der Drehachse aufweisen.

Vorzugsweise bildet die Auswertungseinrichtung Paare von ersten Signalen, die jeweils aus zwei ersten Empfangssignalen oder aus einem ersten Empfangssignal und einem ersten Basissignal bestehen, ermittelt jeweils eine Phasendifferenz zwischen den Phasen des jeweiligen Paares und ermittelt die Drehstellung des Drehelements durch Auswerten der Phasendifferenzen. Durch diese Vorgehensweise ist eine hochgenaue Auswertung möglich. Dies gilt ganz besonders, wenn die Auswertungseinrichtung bezüglich der Auswertung des jeweiligen Paares von ersten Signalen als nach dem 6-Tor-Verfahren arbeitende Schaltung ausgebildet ist. Mittels einer nach dem 6-Tor-Verfahren arbeitenden Schaltung ist eine sehr einfache hochgenaue Ermittlung der Phasendifferenz und hiermit korrespondierend eine sehr einfache hochgenaue Ermittlung der Drehstellung des Drehelements möglich.

Das 6-Tor-Verfahren und die zugehörige Schaltung sind als solche allgemein bekannt. Es kann - rein beispielsweise - auf folgende Fachaufsätze verwiesen werden:

- "Six-Port Technology for Precise Geometrical Measurement Applications - an Overview " von Alexander Koelpin et al., veröffentlicht in den Proceedings zur 43rd European Microwave Conference, 7-10 October 2013, Nürnberg, Deutschland,
- "Wide-Range, Dual Six-Port based Direction-Of-Arrival Detector" von Gabor Vinci et al., The 7th German Microwave Conference (GeMiC), Ilmenau 2012, Seiten 1 bis 4, und
- "Dual Tone Approach for Unambiguous Six-Port Based Interferometric Distance Measurements" von S. Lindner et al. , Microwave Symposium Digest, Seattle 2013 IEEE MTTS International.

Das jeweilige erste Sendesignal weist eine jeweilige erste Signalfrequenz auf. Vorzugsweise sind die Anordnung der Sendeantennen und der Empfangsantennen und die ersten Signalfrequenzen derart aufeinander abgestimmt, dass für mindestens zwei der Paare von ersten Signalen die Phasendifferenz zwischen den Phasen der ersten Signale des jeweiligen Paares während eines vollständigen Umlaufs des Reflektorelements um die Drehachse um weniger als 360° variiert. Dadurch ist es nicht erforderlich, während des Drehens des Drehelements Phasenüberläufe zu erfassen und durch deren Verwertung eine resultierende Phasendifferenz zu ermitteln, die sich dann insgesamt über mehr als 360° erstreckt. Vielmehr ist bereits die ermittelte Phasendifferenz als solche ohne weitergehende Modifikation direkt verwertbar.

In manchen Ausgestaltungen ist es möglich, dass die Auswertungseinrichtung anhand der Phasendifferenzen der ersten Signale zusätzlich einen axialen Reflektorabstand und/oder den radialen Reflektorabstand des Reflektorelements von den Sendeantennen und den Empfangsantennen ermittelt und die Drehstellung des Drehelements unter Berücksichtigung des ermittelten axialen und/oder radialen Reflektorabstands ermittelt. Dadurch ist die Drehstellung des Drehelements genauer ermittelbar.

Es ist möglich, dass die Sendeantennen zusätzlich ein jeweiliges zweites Sendesignal emittieren, das eine andere Signalfrequenz als das jeweilige erste Sendesignal aufweist, und weiterhin auf dem Drehelement zusätzlich zum Reflektorelement in einem radialen Ringabstand von der Drehachse ein sich ringförmig um die Drehachse herum erstreckendes Ringelement angeordnet ist, welches das von der jeweiligen Sendeantenne emittierte jeweilige zweite Sendesignal reflektiert. In diesem Fall ist der Winkelsensor vorzugsweise dadurch ausgestaltet,

- dass die Empfangsantennen das von dem Ringelement reflektierte Signal als jeweiliges zweites Empfangssignal empfangen und ihr jeweiliges zweites Empfangssignal der Auswertungseinrichtung zuführen und
- dass die Auswertungseinrichtung durch Auswerten ausschließlich der ihr zugeführten zweiten Empfangssignale oder durch Auswerten der ihr zugeführten zweiten Empfangssignale und anhand der zweiten Sendesignale ermittelter zweiter Basissignale den radialen Reflektorabstand korrigiert und/oder einen axialen Reflektorabstand des Reflektorelements von den Sendeantennen und den Empfangsantennen ermittelt und die Drehstellung des Drehelements unter Verwertung des ermittelten radialen Reflektorabstands und/oder des ermittelten axialen Reflektorabstands ermittelt.

Durch diese Vorgehensweise kann die Drehstellung des Drehelements genauer ermittelt werden.

Vorzugsweise sind auf dem Grundkörper und/oder auf dem Drehelement Absorberstrukturen zum Absorbieren der von den Sendeantennen emittierten Sendesignale angeordnet. Dadurch können Störreflexionen verringert oder vermieden und das Signal-Rausch-Verhältnis maximiert werden.

Es ist möglich, dass das Reflektorelement auf dem Drehelement erhaben oder vertieft angeordnet ist. Alternativ ist es beispielsweise möglich, dass das Reflektorelement in eine auf dem Drehelement angeordnete Leiterplattenstruktur integriert ist. Es sind aber auch andere Ausgestaltungen möglich.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    eine Maschine mit einem Winkelsensor,
FIG 2    den Winkelsensor von FIG 1 vergrößert,
FIG 3    eine Draufsicht auf den Winkelsensor von FIG 1,
FIG 4    eine schaltungstechnische Implementierung des Winkelsensors von FIG 1,
FIG 5    eine Draufsicht auf eine alternative Ausgestaltung eines Drehelements,
FIG 6    eine Modifikation des Winkelsensors von FIG 2 und
FIG 7    eine weitere Modifikation des Winkelsensors von FIG 2.

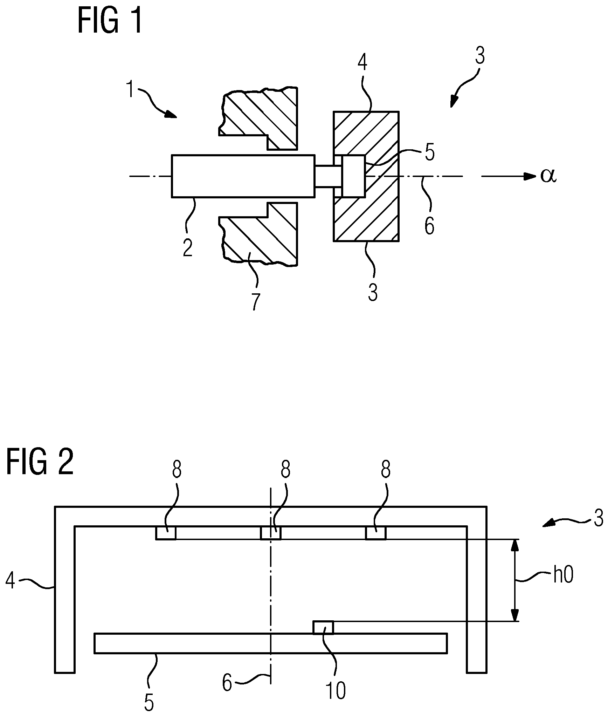

Gemäß FIG 1 weist eine Maschine 1 eine Welle 2 auf, deren Drehwinkel bzw. Drehstellung $\alpha$ erfasst werden soll. Zu diesem Zweck ist ein Winkelsensor 3 vorhanden. Der Winkelsensor 3 weist gemäß den FIG 1 und 2 einen Grundkörper 4 auf, in dem ein Drehelement 5 gelagert ist. Das Drehelement 5 ist dadurch um eine Drehachse 6 rotierbar. Der Grundkörper 4 kann - beispielsweise über Schrauben - mit einem Gehäuse 7 der Maschine 1 verbunden werden. Das Drehelement 5 kann - beispielsweise ebenfalls über Schrauben - mit der Welle 2 der Maschine 1 verbunden werden. Die Verbindung des Drehelements 5 mit der Welle 2 der Maschine 1 erfolgt derart, dass die Drehachse 6 so gut wie möglich mit der Drehachse der Welle 2 der Maschine 1 übereinstimmt. Zur Klarstellung wird darauf hingewiesen, dass der Begriff "Welle" in Bezug auf die Welle 2 der Maschine 1 im Sinne des mechanischen Elements verwendet wird, nicht im Sinne einer sich ausbreitenden Schwingung.

Soweit nachfolgend die Begriffe "axial", "radial" und "tangential" verwendet werden, sind sie stets auf die Drehachse 6 bezogen. "Axial" ist eine Richtung parallel zur Drehachse 6. "Radial" ist eine Richtung orthogonal zur Drehachse 6 direkt auf die Drehachse 6 zu bzw. von ihr weg. "Tangential" ist eine Richtung, die sowohl orthogonal zur Axialrichtung als auch orthogonal zur Radialrichtung verläuft. "Tangential" ist also eine Richtung, die bei einer konstanten Axialposition und mit einem konstanten radialen Abstand kreisförmig um die Drehachse 6 herum gerichtet ist.

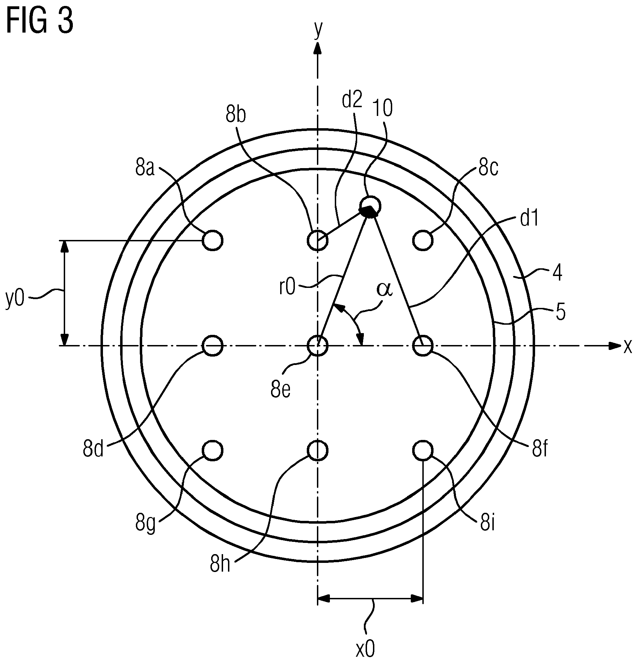

Gemäß den FIG 2 und FIG 3 sind am Grundkörper 4 Antennen 8 angeordnet. Die Antennen 8 sind in den FIG 2 und 3 jeweils mit einem kleinen Buchstaben (a bis i) ergänzt, um sie bei Bedarf voneinander unterscheiden zu können. Mindestens eine der Antennen 8 ist eine Sendeantenne. Mindestens zwei der Antennen 8 sind Empfangsantennen. Die Begriffe "Sendeantenne" und "Empfangsantenne" schließen sich hierbei nicht aus. Es ist also möglich, dass ein Teil der Antennen 8 reine Sendeantennen sind, ein weiterer Teil der Antennen 8 reine Empfangsantennen sind und ein weiterer Teil der Antennen 8 Sende- und Empfangsantennen sind. Soweit nachfolgend von Sendeantennen und Empfangsantennen die Rede ist, bezieht sich die jeweilige Aussage somit auf die entsprechende Funktionalität (also senden bzw. empfangen) der jeweiligen Antenne 8. Hingegen soll nicht ausgeschlossen sein, dass eine Antenne 8, die als Sendeantenne bezeichnet ist, auch als Empfangsantenne wirken kann und umgekehrt eine Antenne 8, die als Empfangsantenne bezeichnet ist, auch als Sendeantenne wirken kann.

Die Empfangsantennen 8 sind orthogonal zur Drehachse 6 gesehen am Grundkörper 4 zweidimensional verteilt angeordnet. Hierbei ist es möglich, dass die Empfangsantennen 8 in einer orthogonal zur Drehachse 6 verlaufenden Ebene angeordnet sind. In diesem Fall bedeutet der Begriff "zweidimensional verteilt", dass mindestens zwei Empfangsantennen 8 existieren, deren jeweilige Verbindungslinie mit der Drehachse 6 einen Winkel bildet, der sowohl von 0° als auch von 180° verschieden ist. Diese Bedingung ist beispielsweise erfüllt, wenn die Antennen 8b und 8f Empfangsantennen sind. Alternativ ist es möglich, dass die Empfangsantennen 8 auch in verschiedenen Axialpositionen angeordnet sind. In diesem Fall bezieht sich die obige Aussage, dass die Verbindungslinien der beiden Empfangsantennen 8 mit der Drehachse 6 einen Winkel bilden, der sowohl von 0° als auch von 180° verschieden ist, auf eine Ebene, in welche die Empfangsantennen 8 fiktiv projiziert werden.

Vorzugsweise sind die Empfangsantennen 8 am Grundkörper 4 in Form eines zweidimensionalen Arrays mit einer Mehrzahl von Zeilen und einer Mehrzahl von Spalten angeordnet. Dies ist beispielsweise der Fall, wenn alle in FIG 3 dargestellten Antennen 8 Empfangsantennen sind. Die in FIG 3 dargestellte Anordnung von 3 x 3 Antennen 8 ist jedoch nur rein beispielhaft. Allgemein können bei Anordnung in Form eines zweidimensionalen Arrays n x m Antennen 8 (mit n, m > 1) vorhanden sein. Es sind auch gewisse Modifikationen des Arrays möglich. Beispielsweise können bei fünf Spalten die beiden äußersten Spalten jeweils drei Empfangsantennen 8 umfassen und die mittleren drei Spalten jeweils fünf Empfangsantennen 8 umfassen. In diesem Fall sind sozusagen die "Ecken" des Arrays abgeschnitten.

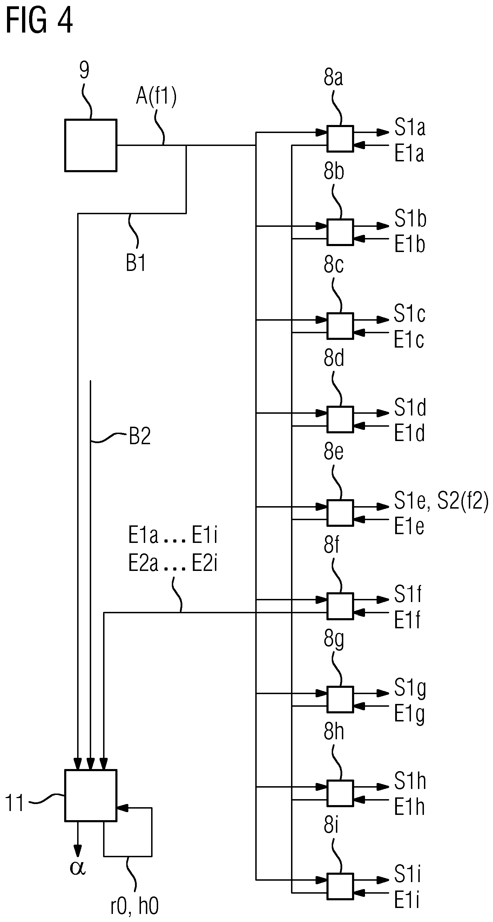

Eine Anregungsschaltung 9 des Winkelsensors 3 generiert gemäß FIG 4 eine Anzahl von Anregungssignalen A. Die Anregungssignale A weisen jeweils eine erste Signalfrequenz f1 auf. Die erste Signalfrequenz f1 liegt im Hochfrequenzbereich, meist oberhalb von 1 GHz, oftmals sogar oberhalb von 10 GHz, beispielsweise bei 12, 24 oder 60 GHz. Sie kann fest vorgegeben oder einstellbar sein. In jedem Fall aber ist ihr genauer Wert für jedes Anregungssignal A zu jedem Zeitpunkt bekannt. Entsprechende Ausgestaltungen der Anregungsschaltung 9, welche die Anregungssignale A hochgenau mit der jeweiligen ersten Signalfrequenz f1 generieren können, sind Fachleuten beispielsweise in Form von PLLs (Phase Locked Loop) in Kombination mit VCOs (Voltage Controlled Oscillator) und anderen Ausgestaltungen bekannt.

Die Anregungsschaltung 9 führt die Anregungssignale A den Sendeantennen 8 zu. Die Sendeantennen 8 emittieren daraufhin ein jeweiliges erstes Sendesignal S1. Die ersten Sendesignale S1 sind in FIG 4 jeweils mit einem kleinen Buchstaben (a bis i) ergänzt, um sie bei Bedarf voneinander unterscheiden zu können. Sofern mehrere Sendeantennen 8 ein jeweiliges erstes Sendesignal S1 emittieren, ist es möglich, dass die Sendeantennen 8 ihre ersten Sendesignale S1 simultan emittieren. In diesem Fall müssen die ersten Signalfrequenzen f1 paarweise verschieden voneinander sein. Alternativ können die Sendeantennen 8 ihre ersten Sendesignale S1 sequenziell nacheinander emittieren. In diesem Fall können die ersten Signalfrequenzen f1 gleich oder voneinander verschieden sein.

Auf dem Drehelement 5 ist in einem radialen Reflektorabstand r0 von der Drehachse 6 ein Reflektorelement 10 angeordnet. Das Reflektorelement 10 erstreckt sich in Tangentialrichtung nur über einen Teilumfang, in der Praxis über einen möglichst kleinen Winkel. Das Reflektorelement 10 reflektiert das von der jeweiligen Sendeantenne 8 emittierte jeweilige erste Sendesignal S1. Der Begriff "reflektieren" ist hierbei nicht im Sinne einer spiegelartigen Reflexion gemeint, sondern im Sinne einer möglichst breiten Streuung des auf das Reflektorelement 10 auftreffenden jeweiligen Sendesignals S1.

Die Empfangsantennen 8 empfangen das von dem Reflektorelement 10 reflektierte Signal als jeweiliges erstes Empfangssignal E1. Die ersten Empfangssignale E1 sind in FIG 4 jeweils mit einem kleinen Buchstaben (a bis i) ergänzt, um sie bei Bedarf voneinander unterscheiden zu können. Die Empfangsantennen 8 führen ihr jeweiliges erstes Empfangssignal E1 einer Auswertungseinrichtung 11 zu. Die Auswertungseinrichtung 11 ermittelt sodann die Drehstellung $\alpha$ des Drehelements 5. Es ist möglich, dass die Auswertungseinrichtung 11 zur Ermittlung der Drehstellung $\alpha$ ausschließlich die ihr zugeführten ersten Empfangssignale E1 auswertet. Alternativ ist es möglich, dass die Auswertungseinrichtung 11 zur Ermittlung der Drehstellung $\alpha$ die ihr zugeführten ersten Empfangssignale E1 und zusätzlich erste Basissignale B1 auswertet, die anhand der ersten Sendesignale S1 (bzw. hiermit äquivalent: der Anregungssignale A) ermittelt werden. Dies wird nachstehend näher erläutert. Hierbei wird zunächst ein einfaches Beispiel erläutert, von dem ausgehend sodann auf Ausgestaltungen verwiesen wird.

Im Rahmen der nachstehenden Erläuterungen, also des einfachen Beispiels, wird zunächst angenommen, dass die Antennen 8 sich entsprechend der Darstellung in FIG 2 in einem einheitlichen axialen Reflektorabstand h0 vom Drehelement 5 befinden, die Antenne 8f sich entsprechend der Darstellung in FIG 3 bei einem Offset x = x0 auf der x-Achse befindet und als kombinierte Sende- und Empfangsantenne betrieben wird und weiterhin die Antenne 8b sich entsprechend der Darstellung in FIG 3 bei einem Offset y = y0 auf der y-Achse befindet und als reine Empfangsantenne betrieben wird. Die beiden Offsets x0, y0 können beispielsweise zwischen 5 mm und 20 mm liegen. Sie weisen vorzugsweise den gleichen Wert auf. Dies ist aber nicht zwingend erforderlich. Der axiale Reflektorabstand h0 kann ebenfalls zwischen 5 mm und 20 mm liegen. Er kann den gleichen Wert wie die Offsets x0, y0 aufweisen. Dies ist aber nicht zwingend.

Ausgehend von den oben genannten Annahmen ergibt sich die Position des Reflektorelements 10 - bei noch unbekannter Drehstellung $\alpha$ - zu

$$\begin{pmatrix} x \\ y \end{pmatrix} = \begin{pmatrix} r0 \cdot \cos \alpha \\ r0 \cdot \sin \alpha \end{pmatrix} \qquad (1)$$

Demzufolge gilt für den Abstand d1 des Reflektorelements 10 von der Antenne 8f

$$d1^2 = r0^2 + x0^2 + h0^2 - 2r0x0 \cdot \cos \alpha \qquad (2)$$

Durch Umformen von Gleichung 2 erhält man somit

$$\cos \alpha = \frac{r0^2 + x0^2 + h0^2 - d1^2}{2r0x0} \qquad (3)$$

In analoger Weise gilt für den Abstand d2 des Reflektorelements 10 von der Antenne 8b

$$d2^2 = r^2 + y0^2 + h0^2 - 2r0y0 \cdot \sin \alpha \qquad (4)$$

Durch Umformen von Gleichung 4 erhält man somit

$$\sin \alpha = \frac{r0^2 + y0^2 + h0^2 - d2^2}{2r0y0} \qquad (5)$$

Die Drehstellung $\alpha$ kann somit anhand der Gleichungen (3) und (5) ermittelt werden, sofern die zugehörigen Abstände d1, d2 des Reflektorelements 10 von den Antennen 8f, 8b ermittelt werden können.

Zum Ermitteln des Abstands d1 können beispielsweise das erste Basissignal B1 und das von der Antenne 8f empfangene erste Empfangssignal E1f verwertet werden. Insbesondere variiert eine Phasendifferenz $\varphi1$ zwischen dem ersten Basissignal B1 und dem ersten Empfangssignal E1f mit dem Abstand d1. Insbesondere gilt für die Phasendifferenz $\varphi1$

$$\varphi1 = \varphi0 + \frac{2d1}{\lambda} \cdot 2\pi \qquad (6)$$

A ist hierbei die Wellenlänge des ersten Sendesignals S1, die ihrerseits wiederum durch die Beziehung

$$\lambda \cdot f1 = c \qquad (7)$$

(mit c = Ausbreitungsgeschwindigkeit der Sende- und Empfangssignale S1, E1) mit der ersten Signalfrequenz f1 verknüpft

ist. $\varphi0$ ist ein Phasenoffset. Der Phasenoffset $\varphi0$ kann einmalig vorab im Rahmen einer Kalibrierung bestimmt werden.

Die Auswertungseinrichtung 11 kann daher zunächst das oben genannte Paar von ersten Signalen - also das erste Basissignal B1 und das erste Empfangssignal Elf der Antenne 8f - bilden und die Phasendifferenz $\varphi1$ zwischen den Phasen dieses Paares ermitteln. Anhand der ermittelten Phasendifferenz $\varphi1$ kann sodann der Abstand d1 ermittelt werden.

In ähnlicher Weise können zum Ermitteln des Abstands d2 beispielsweise das erste Basissignal B1 und das von der Antenne 8b empfangene erste Empfangssignal E1b verwertet werden. Insbesondere variiert eine Phasendifferenz $\varphi2$ zwischen dem ersten Basissignal B1 und dem ersten Empfangssignal E1b mit dem Abstand d1 und mit dem Abstand d2. Insbesondere gilt für die Phasendifferenz $\varphi2$

$$\varphi2 = \varphi0' + \frac{d1+d2}{\lambda} \cdot 2\pi \qquad (8)$$

$\varphi0'$ ist ebenfalls ein Phasenoffset. Auch der Phasenoffset $\varphi0'$ kann einmalig vorab im Rahmen einer Kalibrierung bestimmt werden.

Die Auswertungseinrichtung 11 kann daher nach der Ermittlung des Abstands d1 auch dieses Paar von ersten Signalen - also das erste Basissignal B1 und das erste Empfangssignal E1b der Antenne 8b - bilden und die Phasendifferenz $\varphi2$ zwischen den Phasen dieses Paares ermitteln. Anhand der ermittelten Phasendifferenz $\varphi2$ kann sodann in Verbindung mit dem zuvor ermittelten Abstand d1 der Abstand d2 ermittelt werden.

Das Ermitteln der Phasendifferenzen $\varphi1$, $\varphi2$ ist problemlos möglich. Beispielsweise kann die Auswertungseinrichtung 11 zum Ermitteln der Phasendifferenzen $\varphi1$, $\varphi2$ als nach dem 6-Tor-Verfahren arbeitende Schaltung ausgebildet sein. Diese Art der Auswertung ist allgemein bekannt. Sie ist sehr zuverlässig und genau. Da vorliegend zunächst die Phasen $\varphi1$ und $\varphi2$ ermittelt werden und die Phasen $\varphi1$ und $\varphi2$ nur modulo 2n bestimmt werden können, ist der Abstand d1 anhand der Phase $\varphi1$ jedoch nur innerhalb der halben Wellenlänge A eindeutig bestimmbar. In analoger Weise ist - bei bekanntem Abstand d1 - der Abstand d2 anhand der Phase $\varphi2$ nur innerhalb der Wellenlänge A eindeutig bestimmbar. Dennoch sind die Abstände d1 und d2 eindeutig ermittelbar.

Um im Rahmen des obenstehenden Beispiels den Abstand d1 anhand der Phase $\varphi1$ direkt eindeutig bestimmen zu können, muss die Differenz zwischen dem Maximum und dem Minimum des Abstands d1 kleiner als die halbe Wellenlänge A sein. Das Maximum und das Minimum des Abstands d1 sind exakt nicht ganz einfach zu berechnen. Unabhängig vom radialen Reflektorabstand r0 und unabhängig vom axialen Reflektorabstand h0 ist diese Bedingung jedoch erfüllt, wenn folgende Beziehung gilt:

$$2x0 < \frac{\lambda}{2} \qquad (9)$$

In Verbindung mit Gleichung 7 ist daher die Ermittlung des Abstands d1 eindeutig möglich, wenn die Beziehung

$$f1 < \frac{c}{4x0} \qquad (10)$$

gilt. Denn in diesem Fall variiert die Phasendifferenz $\varphi1$ zwischen dem ersten Empfangssignal Elf und dem ersten Basissignal B1 während eines vollständigen Umlaufs des Reflektorelements 10 um die Drehachse 6 um weniger als 360°.

Um im Rahmen des obenstehenden Beispiels in analoger Weise den Abstand d2 anhand der Phasendifferenz $\varphi2$ direkt eindeutig bestimmen zu können, muss auch für die Phasendifferenz $\varphi2$ zwischen dem ersten Empfangssignal E1b und dem ersten Basissignal B1 gelten, dass sie während eines vollständigen Umlaufs des Reflektorelements 10 um die Drehachse 6 um weniger als 360° variiert. Diese Bedingung ist erfüllt, wenn die Differenz zwischen dem Maximum und dem Minimum der Summe der Abstände d1 und d2 kleiner als die Wellenlänge A ist.

Das Maximum der Summe der Abstände d1 und d2 ist nicht ganz einfach zu berechnen. In analoger Weise ist auch das Minimum der Summe der Abstände d1 und d2 nicht ganz einfach zu berechnen. Die Differenz von Maximum und Minimum der Summe der Abstände d1 und d2 lässt sich jedoch abschätzen:

$$MAX(d1+d2) - MIN(d1+d2) < 2x0 + 2y0 < \lambda \qquad (11)$$

In Verbindungen mit den Beziehungen (7) und (9) ist die genannte Bedingung daher erfüllt, wenn folgende

Beziehung gilt:

$$f1 < \frac{c}{4y0} \qquad\qquad (12)$$

In diesem Fall variiert auch die Phasendifferenz $\varphi2$ zwischen dem ersten Empfangssignal E1b und dem ersten Basissignal B1 während eines vollständigen Umlaufs des Reflektorelements 10 um die Drehachse 6 um weniger als 360°. Das gleiche Ergebnis würde sich auch ergeben, wenn die Antenne 8b als Sende- und Empfangsantenne wirken würde, also das von ihr selbst ausgesendete Signal wieder empfangen würde. Dies zeigt ein einfacher Vergleich von Gleichung (12) mit Gleichung (10).

Wenn die Bedingungen (10) und (12) erfüllt sind, sind somit anhand der Phasendifferenzen $\varphi1$ und $\varphi2$ *die Abstände d1 und d2 eindeutig ermittelbar und anhand der Abstände d1 und d2 der Sinus und der Kosinus der Drehstellung $\alpha$ eindeutig ermittelbar. Mit Sinus und Kosinus der Drehstellung $\alpha$ ist jedoch auch die Drehstellung $\alpha$ selbst eindeutig ermittelbar.*

Auch wenn die Bedingungen (10) und (12) nicht erfüllt sind, ist die Ermittlung der Drehstellung $\alpha$ möglich. Beispielsweise ist es bei hinreichend schneller Erfassung und Ermittlung aufeinanderfolgender Phasendifferenzen $\varphi1$, $\varphi2$ möglich, Phasensprünge zu erkennen und dadurch den Auflösungsbereich für die Abstände d1, d2 prinzipiell beliebig zu erweitern. Ebenso ist es möglich, die Messung der Phasendifferenzen $\varphi1$, $\varphi2$ schnell nacheinander bei mehreren ersten Signalfrequenzen f1 durchzuführen und durch Kombination der Messwerte den Auflösungsbereich - prinzipiell beliebig - zu erweitern. Weiterhin ist es möglich, mehr als nur zwei Phasendifferenzen zu ermitteln. Beispielsweise können - sei es alternativ, sei es zusätzlich zu den Phasendifferenzen $\varphi1$, $\varphi2$ - die Phasendifferenzen folgender Paare von ersten Empfangssignalen E1 gebildet werden:

- Erste Empfangssignale E1a und E1c,
- erste Empfangssignale E1a und E1g,
- erste Empfangssignale E1g und E1i,
- erste Empfangssignale E1c und E1i,
- erste Empfangssignale E1a und E1i,
- erste Empfangssignale E1c und E1g.

Die obenstehende Auflistung ist rein beispielhaft. Es können alternativ oder zusätzlich auch andere Paare von ersten Empfangssignalen E1 gebildet werden. Auch kann jedes der ersten Empfangssignale E1a bis E1i mit dem ersten Basissignal B1 gepaart werden. Mit jedem weiteren Paar von ersten Signalen B1, E1 erhält man weitere Informationen.

Die weiteren Informationen können beispielsweise, falls zuvor eine Zweideutigkeit oder sogar noch weitergehende Mehrdeutigkeit bestand, zur eindeutigen Ermittlung der Drehstellung $\alpha$ genutzt werden. Ebenso ist es jedoch möglich, derartige Paare von ersten Signalen B1, E1 auch dann zu verwerten wenn die Drehstellung $\alpha$ vom Ansatz her bereits eindeutig ermittelt werden kann. Insbesondere ist es in diesem Fall möglich, nicht nur die Drehstellung $\alpha$ als variabel und damit zunächst unbekannt anzunehmen, sondern zusätzlich auch den axialen Reflektorabstand h0 und/oder den radialen Reflektorabstand r0 zu ermitteln und diese beiden Größen h0, r0 bei der Ermittlung der Drehstellung $\alpha$ des Drehelements 5 zu berücksichtigen. Sowohl der axiale Reflektorabstand h0 als auch der radiale Reflektorabstand r0 sollten zwar konstant sein. In der Praxis können sich aber während einer Umdrehung des Drehelements 5 um die Drehachse 6 gewisse Schwankungen des radialen Abstands r0 beispielsweise aufgrund einer leicht exzentrischen Anordnung der Antennen 8 relativ zur Drehachse 6 ergeben. Auch ist es möglich, dass das Drehelement 5 nicht exakt orthogonal zur Drehachse 6 orientiert ist, so dass der axiale Reflektorabstand h0 dadurch während einer Umdrehung des Drehelements 5 um die Drehachse 6 variiert. Derartige Schwankungen können bei Verwertung von hinreichend vielen Phasendifferenzen ermittelt werden.

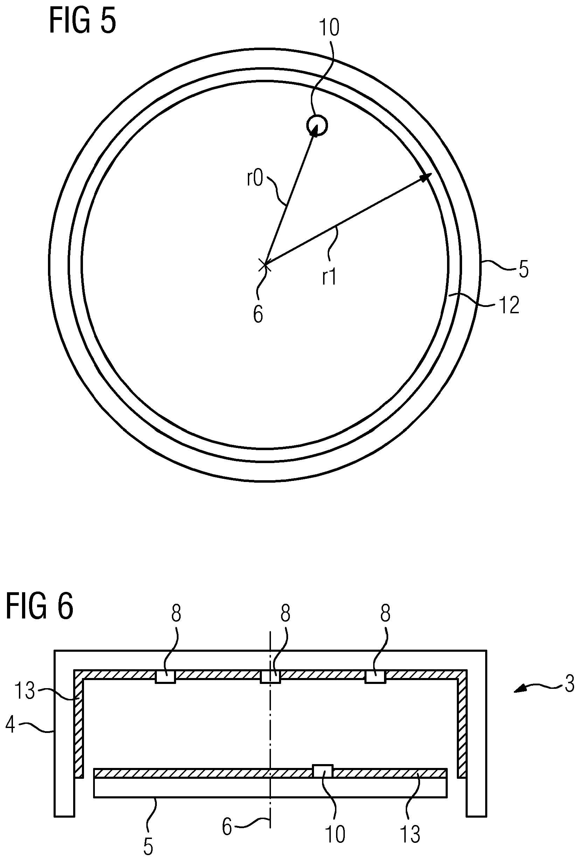

Eine alternative Möglichkeit zur Ermittlung zumindest des radialen Abstands r0, eventuell auch des axialen Reflektorabstands h0, wird nachstehend in Verbindung mit FIG 5 näher erläutert. Gemäß FIG 5 ist auf dem Drehelement 5 zusätzlich zum Reflektorelement 10 in einem radialen Ringabstand r1 von der Drehachse 6 ein Ringelement 12 angeordnet. Das Ringelement 12 erstreckt sich ringförmig um die Drehachse 6 herum. Es bildet also einen vollständigen Kreisring. Der radiale Ringabstand r1 kann nach Bedarf größer oder kleiner als der radiale Reflektorabstand r0 sein. Den gleichen Wert darf er jedoch nicht aufweisen.

Das Ringelement 12 ist vorzugsweise derart ausgestaltet, dass es zwar ein jeweiliges zweites Sendesignal S2 (siehe FIG 4) reflektiert, das von einer jeweiligen Sendeantenne 8 (dargestellt ist dies in Figur 4 nur für die Antenne 8e) emittiert wird. Das jeweilige zweite Sendesignal S2 weist jedoch eine andere Signalfrequenz f2 auf als das jeweilige erste Sendesignal S1. Insbesondere ist es möglich, das Reflektorelement 10, das Ringelement 12 und die Signalfrequenzen f1, f2 derart aufeinander abzustimmen, dass die von dem Ringelement 12 herrührenden Reflexionen die ersten Empfangssignale E1 nicht oder zumindest nur geringfügig beeinflussen. Beispielsweise kann das Ringelement 12 in Radialrichtung gesehen hinreichend schmal sein, so dass es mittels der ersten Empfangssignale E1 nicht erfasst wird. In diesem Fall sind die zweiten Signalfrequenzen f2 in der Regel erheblich größer als die ersten Signalfrequenzen f1, beispielsweise mindestens fünfmal so groß.

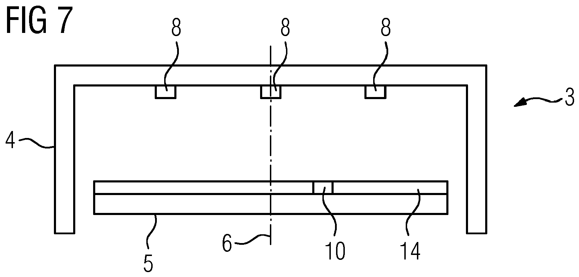

Die Empfangsantennen 8 empfangen das von dem Ringelement 12 reflektierte Signal als jeweiliges zweites Empfangssignal E2. Sie führen ihr jeweiliges zweites Empfangssignal E2 der Auswertungseinrichtung 11 zu. In diesem Fall kann die Auswertungseinrichtung 11 den radialen Reflektorabstand r0 korrigieren und/oder den axialen Reflektorabstand h0 des Reflektorelements 10 von den Antennen 8 ermitteln und die Drehstellung $\alpha$ des Drehelements 5 unter Verwertung des ermittelten radialen Reflektorabstands r0 und/oder des ermittelten axialen Reflektorabstands h0 ermitteln. Zum Ermitteln des radialen Reflektorabstands r0 und/oder des axialen Reflektorabstands h0 kann die Auswertungseinrichtung 11 nach Bedarf ausschließlich die ihr zugeführten zweiten Empfangssignale E2 oder die ihr zugeführten zweiten Empfangssignale E2 und anhand der zweiten Sendesignale S2 ermittelter zweiter Basissignale B2 auswerten. Beispielsweise kann die Auswertungseinrichtung 11 in dem Fall, dass ausschließlich die Antenne 8e ein zweites Sendesignal S2 emittiert, Intensitätsschwankungen der zweiten Empfangssignale E2 auswerten und darauf aufbauend eine periodische Schwankung des radialen Reflektorabstands r0 und/oder des axialen Reflektorabstands h0 ermitteln. Entsprechende Vorgehensweisen sind Fachleuten allgemein bekannt. Nachfolgend werden in Verbindung mit den FIG 6 und 7 Ausgestaltungen des Winkelsensors der FIG 2 und 3 erläutert. Diese Ausgestaltungen sind jedoch ohne weiteres auch bei der alternativen Ausgestaltung gemäß FIG 5 realisierbar. Weiterhin ist die Ausgestaltung von FIG 6 auch mit den Ausgestaltungen der FIG 7 kombinierbar.

Gemäß FIG 6 sind auf dem Grundkörper 4 und/oder auf dem Drehelement 5 Absorberstrukturen 13 angeordnet. Die Absorberstrukturen 13 absorbieren zumindest die von den Sendeantennen 8 emittierten ersten Sendesignale S1, vorzugsweise auch die zweiten Sendesignale S2. Durch diese Ausgestaltung kann insbesondere die SNR (= signal-noise-ratio) optimiert werden.

Gemäß den FIG 2 und 6 ist das Reflektorelement 10 auf dem Drehelement 5 erhaben angeordnet. Gleiches gilt gegebenenfalls auch für das Ringelement 12. Alternativ könnten das Reflektorelement 10 und gegebenenfalls auch das Ringelement 12 auf dem Drehelement 5 auch vertieft angeordnet sein. Gemäß FIG 7 ist das Reflektorelement 10 hingegen auf dem Drehelement 5 weder erhaben noch vertieft angeordnet, sondern in eine Leiterplattenstruktur 14 integriert. Auch hier gilt gegebenenfalls gleiches wieder für das Ringelement 12.

Zusammengefasst betrifft die vorliegende Erfindung somit folgenden Sachverhalt:

Ein Winkelsensor weist einen Grundkörper 4 auf, in dem ein Drehelement 5 gelagert ist, so dass das Drehelement 5 um eine Drehachse 6 rotierbar ist. Am Grundkörper 4 ist eine Anzahl von Sendeantennen 8 angeordnet, die ein jeweiliges erstes Sendesignal S1 emittieren. Auf dem Drehelement 5 ist in einem radialen Reflektorabstand r0 von der Drehachse 6 ein sich tangential zur Drehachse 6 gesehen nur über einen Teilumfang erstreckendes Reflektorelement 10 angeordnet, welches das von der jeweiligen Sendeantenne 8 emittierte jeweilige erste Sendesignal S1 reflektiert. Am Grundkörper 4 sind mehrere Empfangsantennen 8 angeordnet, die das von dem Reflektorelement 10 reflektierte Signal als jeweiliges erstes Empfangssignal E1 empfangen und ihr jeweiliges erstes Empfangssignal E1 einer Auswertungseinrichtung 11 zuführen. Die Auswertungseinrichtung 11 ermittelt durch Auswerten ausschließlich der ihr zugeführten ersten Empfangssignale E1 oder durch Auswerten der ihr zugeführten ersten Empfangssignale E1 und anhand der ersten Sendesignale S1 ermittelter erster Basissignale B1 die Drehstellung $\alpha$ des Drehelements 5.

Die vorliegende Erfindung weist viele Vorteile auf. Insbesondere ist auf einfache und zuverlässige Weise eine hochgenaue Erfassung der Drehstellung $\alpha$ des Drehelements 5 möglich. Die Erfassung der Drehstellung $\alpha$ ist bei jeder Drehstellung $\alpha$ möglich. Die Radartechnik ist kostengünstig und zuverlässig implementiert war. Es erfolgt eine berührungslose Erfassung. Die erforderliche Montagegenauigkeit ist relativ gering. Der Winkelsensor 3 arbeitet robust, auch in einer rauen Umgebung. Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die angefügten Ansprüche definiert ist.

**Patentansprüche**

1.  Winkelsensor, umfassend eine Anzahl von Sendeantennen (8), mehrere Empfangsantennen (8), eine Auswertungseinrichtung (11), ein Reflektorelement (10),

    - wobei der Winkelsensor einen Grundkörper (4) und ein Drehelement (5) aufweist,
    - wobei das Drehelement (5) in dem Grundkörper (4) gelagert ist, so dass das Drehelement (5) um eine Drehachse (6) rotierbar ist,
    - wobei am Grundkörper (4) die Anzahl von Sendeantennen (8) angeordnet ist, die ein jeweiliges erstes Sendesignal (S1) emittieren,

- wobei am Grundkörper (4) die mehreren Empfangsantennen (8) angeordnet sind, die ein jeweiliges erstes Empfangssignal (E1) empfangen und ihr jeweiliges erstes Empfangssignal (E1) der Auswertungseinrichtung (11) zuführen, und

- wobei die Auswertungseinrichtung (11) durch Auswerten ausschließlich der ihr zugeführten ersten Empfangssignale (E1) oder durch Auswerten der ihr zugeführten ersten Empfangssignale (E1) und anhand der ersten Sendesignale (S1) ermittelter erster Basissignale (B1) die Drehstellung (a) des Drehelements (5) ermittelt, wobei

- auf dem Drehelement (5) in einem radialen Reflektorabstand (r0) von der Drehachse (6) das sich tangential zur Drehachse (6) gesehen nur über einen Teilumfang erstreckende Reflektorelement (10) angeordnet ist, welches das von der jeweiligen Sendeantenne (8) emittierte jeweilige erste Sendesignal (S1) reflektiert, und

- die Empfangsantennen (8) dazu eingerichtet sind, das von dem Reflektorelement (10) reflektierte Signal als jeweiliges erstes Empfangssignal (E1) zu empfangen.

2. Winkelsensor nach Anspruch 1,
**dadurch gekennzeichnet,**
**dass** die Empfangsantennen (8) orthogonal zur Drehachse (6) gesehen am Grundkörper (4) zweidimensional verteilt angeordnet sind.

3. Winkelsensor nach Anspruch 2,
**dadurch gekennzeichnet,**
**dass** die Empfangsantennen (8) am Grundkörper (4) in Form eines zweidimensionalen Arrays mit einer Mehrzahl von Zeilen und einer Mehrzahl von Spalten angeordnet sind.

4. Winkelsensor nach Anspruch 1, 2 oder 3,
**dadurch gekennzeichnet,**
**dass** die Auswertungseinrichtung (11) dazu eingerichtet ist, Paare von ersten Signalen (B1, E1) zu bilden, die jeweils aus zwei ersten Empfangssignalen (E1) oder aus einem ersten Empfangssignal (E1) und einem ersten Basissignal (B1) bestehen, dass die Auswertungseinrichtung (11) dazu eingerichtet ist, jeweils eine Phasendifferenz ($\varphi1$, $\varphi2$) zwischen den Phasen des jeweiligen Paares zu ermitteln und dass die Auswertungseinrichtung (11) dazu eingerichtet ist, die Drehstellung (a) des Drehelements (5) durch Auswerten der Phasendifferenzen ($\varphi1$, $\varphi2$) zu ermitteln.

5. Winkelsensor nach Anspruch 4,
**dadurch gekennzeichnet,**
**dass** die Auswertungseinrichtung (11) bezüglich der Auswertung des jeweiligen Paares von ersten Signalen (B1, E1) als nach dem 6-Tor-Verfahren arbeitende Schaltung ausgebildet ist.

6. Winkelsensor nach Anspruch 4 oder 5,
**dadurch gekennzeichnet,**
**dass** das jeweilige erste Sendesignal (S1) eine jeweilige erste Signalfrequenz (f1) aufweist und dass die Anordnung der Sendeantennen (8) und der Empfangsantennen (8) und die ersten Signalfrequenzen (f1) derart aufeinander abgestimmt sind, dass für mindestens zwei der Paare von ersten Signalen (B1, E1f, E1b) die Phasendifferenz zwischen den Phasen der ersten Signale (B1, E1f, E1b) des jeweiligen Paares während eines vollständigen Umlaufs des Reflektorelements (10) um die Drehachse (6) um weniger als 360° variiert.

7. Winkelsensor nach Anspruch 4, 5 oder 6,
**dadurch gekennzeichnet,**
**dass** die Auswertungseinrichtung (11) dazu eingerichtet ist anhand der Phasendifferenzen ($\varphi1$, $\varphi2$) der ersten Signale (B1, E1) zusätzlich einen axialen Reflektorabstand (h0) und/oder den radialen Reflektorabstand (r0) des Reflektorelements (10) von den Sendeantennen (8) und den Empfangsantennen (8) zu ermitteln und die Drehstellung ($\alpha$) des Drehelements (5) unter Berücksichtigung des ermittelten axialen und/oder radialen Reflektorabstands (h0, r0) zu ermitteln.

8. Winkelsensor nach einem der obigen Ansprüche,
**dadurch gekennzeichnet,**

- **dass** die Sendeantennen (8) dazu eingerichtet sind zusätzlich ein jeweiliges zweites Sendesignal (S2) zu emittieren, das eine andere Signalfrequenz (f1) als das jeweilige erste Sendesignal (S1) aufweist,

- **dass** auf dem Drehelement (5) zusätzlich zum Reflektorelement (10) in einem radialen Ringabstand (r1) von der Drehachse (6) ein sich ringförmig um die Drehachse (6) herum erstreckendes Ringelement (12) angeordnet ist, welches dazu eingerichtet ist, das von der jeweiligen Sendeantenne (8) emittierte jeweilige zweite Sendesignal (S2) zu reflektieren,

- **dass** die Empfangsantennen (8) dazu eingerichtet sind, das von dem Ringelement (12) reflektierte Signal als jeweiliges zweites Empfangssignal (E2) zu empfangen und dazu eingerichtet sind, ihr jeweiliges zweites Empfangssignal (E2) der Auswertungseinrichtung (11) zuzuführen und

- **dass** die Auswertungseinrichtung (11) dazu eingerichtet ist, durch Auswerten ausschließlich der ihr zugeführten zweiten Empfangssignale (E2) oder durch Auswerten der ihr zugeführten zweiten Empfangssignale (E2) und anhand der zweiten Sendesignale (S2) ermittelter zweiter Basissignale (B2) den radialen Reflektorabstand (r0) zu korrigieren und/oder einen axialen Reflektorabstand (h0) des Reflektorelements (10) von den Sendeantennen (8) und den Empfangsantennen (8) zu ermitteln und die Drehstellung (a) des Drehelements (5) unter Verwertung des ermittelten radialen Reflektorabstands (r0) und/oder des ermittelten axialen Reflektorabstands (h0) zu ermitteln.

9. Winkelsensor nach einem der obigen Ansprüche,
   **dadurch gekennzeichnet,**
   **dass** auf dem Grundkörper (4) und/oder auf dem Drehelement (5) Absorberstrukturen (13) zum Absorbieren der von den Sendeantennen (8) emittierten Sendesignale (S1, S2) angeordnet sind.

10. Winkelsensor nach einem der obigen Ansprüche,
    **dadurch gekennzeichnet,**
    **dass** das Reflektorelement (10) auf dem Drehelement (5) erhaben oder vertieft angeordnet ist oder dass das Reflektorelement (10) in eine auf dem Drehelement (5) angeordnete Leiterplattenstruktur (14) integriert ist.

## Claims

1. Angular sensor, comprising a number of transmitting antennae (8), a plurality of receiving antennae (8), an evaluation device (11), a reflector element (10),

   - wherein the angular sensor has a base body (4) and a rotating element (5),
   - wherein the rotating element (5) is mounted in the base body (4) such that the rotating element (5) can be rotated about an axis of rotation (6),
   - wherein the number of transmitting antennae (8) that each emit a first transmission signal (S1) is arranged on the base body (4),
   - wherein the plurality of receiving antennae (8) is arranged on the base body (4) that each receive a first receiving signal (E1) and each supply their first receiving signal (E1) to the evaluation device (11), and
   - wherein the evaluation device (11) determines the position of rotation ($\alpha$) of the rotating element (5) by evaluating only the first receiving signals (E1) supplied thereto or by evaluating the first receiving signals supplied thereto and first base signals (B1) determined on the basis of the first transmission signals (S1), wherein
   - the reflector element (10) that extends only over part of the periphery, as observed tangentially in relation to the axis of rotation (6), and which reflects each respective first transmission signal (S1) emitted by each respective transmitting antenna (8) is arranged on the rotating element (5) at a radial reflector distance (r0) from the axis of rotation (6), and
   - the receiving antennae (8) are configured so as to receive the signal reflected by the reflector element (10) as a respective first receiving signal (E1).

2. Angular sensor according to claim 1,
   **characterised in that,**
   viewed orthogonally to the axis of rotation (6), the receiving antennae (8) are arranged on the base body (4) in a two-dimensionally distributed manner.

3. Angular sensor according to claim 2,
   **characterised in that**
   the receiving antennae (8) are arranged on the base body (4) in the form of a two-dimensional array with a plurality of rows and a plurality of columns.

**4.** Angular sensor according to claim 1, 2 or 3,
**characterised in that**
the evaluation device (11) is configured so as to form pairs of first signals (B1, E1) each of which consists of two first receiving signals (E1) or of a first receiving signal (E1) and a first base signal (B1), **in that** the evaluation device (11) is configured in each case so as to determine a phase difference ($\varphi1$, $\varphi2$) between the phases of the respective pair and **in that** the evaluation device (11) is configured so as to determine the position of rotation ($\alpha$) of the rotating element (5) by evaluating the phase differences ($\varphi1$, $\varphi2$).

**5.** Angular sensor according to claim 4,
**characterised in that**
the evaluation device (11) is designed as a circuit operating according to the 6-port method with respect to the evaluation of the respective pair of first signals (B1, E1).

**6.** Angular sensor according to claim 4 or 5,
**characterised in that**
the respective first transmission signal (S1) has a respective first signal frequency (f1) and that the arrangement of the transmitting antennae (8) and the receiving antennae (8) and the first signal frequencies (f1) are coordinated in such a way that the phase difference between the phases of the first signals (B1, E1f, E1b) of the respective pair varies by less than 360° for at least two of the pairs of first signals (B1, E1f, E1b) during a complete revolution of the reflector element (10) around the axis of rotation (6).

**7.** Angular sensor according to claim 4, 5 or 6,
**characterised in that**
the evaluation device (11) is configured so as to also determine an axial reflector distance (h0) and/or the radial reflector distance (r0) of the reflector element (10) from the transmitting antennae (8) and the receiving antennae (8) on the basis of the phase differences ($\varphi1$, $\varphi2$) of the first signals (B1, E1) and to determine the position of rotation ($\alpha$) of the rotating element (5) taking into account the determined axial and/or radial reflector distances (h0, r0).

**8.** Angular sensor according to one of the above claims,
**characterised in that**

- the transmitting antennae (8) are configured so as to also emit a respective second transmission signal (S2) which has a different signal frequency (f1) from the respective first transmission signal (S1),
- in addition to the reflector element (10) at a radial annular distance (r1) from the axis of rotation (6), an annular element (12) which extends annularly around the axis of rotation (6) is arranged on the rotating element (5), which annular element is configured so as to reflect the respective second transmission signal (S2) emitted by the respective transmitting antenna (8),
- the receiving antennae (8) are configured so as to receive the signal reflected by the annular element (12) as a respective second receiving signal (E2) and are configured so as to supply their respective second receiving signal (E2) to the evaluation device (11) and
- by evaluating only the second receiving signals (E2) supplied thereto or by evaluating the second receiving signals (E2) supplied thereto and second base signals (B2) determined on the basis of second transmission signals (S2), the evaluation device (11) is configured so as to correct the radial reflector distance (r0) and/or to determine an axial reflector distance (h0) of the reflector element (10) from the transmitting antennae (8) and the receiving antennae (8) and to determine the position of rotation ($\alpha$) of the rotating element (5) using the determined radial reflector distance (r0) and/or the determined axial reflector distance (h0).

**9.** Angular sensor according to one of the above claims,
**characterised in that**
absorber structures (13) for absorbing the transmission signals (S1, S2) emitted by the transmitting antennae (8) are arranged on the base body (4) and/or on the rotating element (5).

**10.** Angular sensor according to one of the above claims,
**characterised in that**
the reflector element (10) is arranged raised or recessed on the rotating element (5) or that the reflector element (10) is integrated into a printed circuit board structure (14) arranged on the rotating element (5).

**Revendications**

1. Capteur d'angle, comprenant un certain nombre d'antennes (8) d'émission, plusieurs antennes (8) de réception, un dispositif (11) d'analyse, un élément (10) réflecteur,

   - dans lequel le capteur d'angle a un corps (4) de base et un élément (5) tournant,
   - dans lequel l'élément (5) tournant est monté dans le corps (4) de base, de manière à ce que l'élément (5) tournant puisse tourner autour d'un axe (6) de rotation,
   - dans lequel, sur le corps (4) de base est monté le certain nombre d'antennes (8) d'émission, qui émettent un premier signal (S1) respectif d'émission,
   - dans lequel, sur le corps (4) de base sont montées les plusieurs antennes (8) de réception, qui reçoivent un premier signal (E1) respectif de réception et qui envoient leur premier signal (E1) respectif de réception au dispositif (11) d'analyse, et
   - dans lequel le dispositif (11) d'analyse détermine en analysant exclusivement les premiers signaux (E1) de réception, qui lui sont envoyés, ou en analysant les premiers signaux (E1) de réception, qui lui sont envoyés, et des premiers signaux (B1) de base, déterminés à l'aide des premiers signaux (S1) d'émission, la position (a) en rotation de l'élément (5) tournant, dans lequel
   - sur l'élément (5) tournant est monté, à une distance (r0) radiale de réflecteur de l'axe (6) de rotation, l'élément réflecteur ne s'étendant, considéré tangentiellement à l'axe (6) de rotation, que sur un pourtour partiel, l'élément (10) réflecteur, qui réfléchit le premier signal (S1) respectif d'émission émis par l'antenne (8) respective d'émission, et
   - les antennes (8) de réception sont conçues pour recevoir le signal réfléchi par l'élément (10) réflecteur sous la forme d'un premier signal (E1) respectif de réception.

2. Capteur d'angle suivant la revendication 1,
   **caractérisé**
   **en ce que** les antennes (8) de réception sont montées, considéré orthogonalement à l'axe (6) de rotation, en étant réparties en deux dimensions sur le corps (4) de base.

3. Capteur d'angle suivant la revendication 2,
   **caractérisé,**
   **en ce que** les antennes (8) de réception sont montées sur le corps (4) de base sous la forme d'un réseau en deux dimensions, ayant une pluralités de lignes et une pluralité de colonnes.

4. Capteur d'angle suivant la revendication 1, 2 ou 3,
   **caractérisé**
   **en ce que** le dispositif (11) d'analyse est conçu pour former des paires de premiers signaux (B1, E1), qui sont constituées respectivement de deux premiers signaux (E1) de réception ou d'un premier signal (E1) de réception et d'un premier signal (B1) de base, **en ce que** le dispositif (11) d'analyse est conçu pour déterminer respectivement une différence ($\varphi1$, $\varphi2$) de phase entre les phases de la paire respective, et **en ce que** le dispositif (11) d'analyse est conçu pour déterminer la position (a) en rotation de l'élément (5) tournant par analyse des différences ($\varphi1$, $\varphi2$) de phase.

5. Capteur d'angle suivant la revendication 4,
   **caractérisé**
   **en ce que** le dispositif (11) d'analyse est constitué, pour ce qui concerne l'analyse de la paire respective de premiers signaux (B1, E1), sous la forme d'un circuit travaillant suivant le procédé à 6 portes.

6. Capteur d'angle suivant la revendication 4 ou 5,
   **caractérisé**
   **en ce que** le premier signal (S1) respectif d'émission a une première fréquence (f1) respective de signal et **en ce que** l'agencement des antennes (8) d'émission et des antennes (8) de réception et les premières fréquences (f1) de signal sont adaptées l'un aux autres, de manière à ce que, pour au moins deux des paires de premiers signaux (B1, E1f, E1b), la différence de phase entre les phases des premier signaux (B1, E1f, E1b) de la paire respective, pendant un tour complet de l'élément (10) réflecteur autour de l'axe (6) de rotation, varie de moins de 360°.

7. Capteur d'angle suivant la revendication 4, 5 ou 6,
   **caractérisé**

**en ce que** le dispositif (11) d'analyse est conçu pour déterminer, à l'aide des différences ($\varphi 1$, $\varphi 2$) de phase des premiers signaux (B1, E1), en outre une deuxième distance (h0) axiale de réflecteur et/ou la distance (r0) radiale de réflecteur de l'élément (10) réflecteur aux antennes (8) d'émission et aux antennes (8) de réception, et pour déterminer la position (a) en rotation de l'élément (5) tournant, en tenant compte de la distance (h0, r0) axiale et/ou radiale de réflecteur déterminée.

8. Capteur d'angle suivant l'une des revendications précédentes,
   **caractérisé**

   - **en ce que** les antennes (8) d'émission sont conçues pour émettre en outre un deuxième signal (S2) respectif d'émission, qui a une fréquence (f1) de signal autre que le premier signal (S1) respectif d'émission,
   - **en ce que** sur l'élément (5) tournant est monté, en plus de l'élément (10) réflecteur, à une distance (r1) annulaire radiale de l'axe (6) de rotation, un élément (12) annulaire s'étendant annulairement tout autour de l'axe (6) de rotation, qui est conçu pour réfléchir le deuxième signal (S2) respectif d'émission émis par l'antenne (8) respective d'émission,
   - **en ce que** les antennes (8) de réception sont conçues pour recevoir le signal réfléchi par l'élément (12) annulaire, comme deuxième signal (E2) respectif de réception, et sont conçues pour envoyer le deuxième signal (E2) respectif de réception au dispositif (11) d'analyse et
   - **en ce que** le dispositif (11) d'analyse est conçu pour corriger, en analysant exclusivement les deuxièmes signaux (E2) de réception, qui lui sont envoyés, ou en analysant les deuxièmes signaux (E2) de réception, qui lui sont envoyés, et des deuxièmes signaux (B2) de base, déterminés à l'aide des deuxièmes signaux (S2) d'émission, la distance (r0) radiale de réflecteur et/ou pour déterminer une distance (h0) axiale de réflecteur de l'élément (10) réflecteur aux antennes (8) d'émission et aux antennes (8) de réception et pour déterminer la position (a) en rotation de l'élément (5) tournant, en exploitant la distance (r0) radiale de réflecteur déterminée et/ou la distance (h0) axial de réflecteur déterminée.

9. Capteur d'angle suivant l'une des revendications précédentes,
   **caractérisé**
   **en ce que** sur le corps (4) de base et/ou sur l'élément (5) tournant sont montées des structures (13) absorbantes d'absorption des signaux (S1, S2) d'émission émis par les antennes (8) d'émission.

10. Capteur d'angle suivant l'une des revendications précédentes,
    **caractérisé**
    **en ce que** l'élément (10) réflecteur est monté, en étant en saillie ou en retrait, sur l'élément (5) tournant ou **en ce que** l'élément (10) réflecteur est intégré dans une structure (14) de circuit imprimé montée sur l'élément (5) tournant.

## FIG 1

## FIG 2

FIG 3

# FIG 4

FIG 5

FIG 6

FIG 7

**IN DER BESCHREIBUNG AUFGEFÜHRTE DOKUMENTE**

**In der Beschreibung aufgeführte Patentdokumente**

- US 20160138946 A1
- DE 102013209364 A1
- DE 102013202765 A1
- DE 102016202052 B3
- DE 19632345 A1
- EP 1790953 A1

**In der Beschreibung aufgeführte Nicht-Patentliteratur**

- **ALEXANDER KOELPIN et al.** Six-Port Technology for Precise Geometrical Measurement Applications - an Overview. *Proceedings zur 43rd European Microwave Conference,* 07. Oktober 2013
- **GABOR VINCI et al.** Wide-Range, Dual Six-Port based Direction-Of-Arrival Detector. *The 7th German Microwave Conference (GeMiC), Ilmenau,* 2012, 1-4
- **S. LINDNER et al.** Dual Tone Approach for Unambiguous Six-Port Based Interferometric Distance Measurements. *Microwave Symposium Digest, Seattle 2013 IEEE MTTS International*